# EUROPÄISCHE PATENTSCHRIFT

(11) **EP 1 995 011 B1**
(45) Veröffentlichungstag und Bekanntmachung des Hinweises auf die Patenterteilung: **14.07.2010**
(21) Anmeldenummer: 07010449.2
(22) Anmeldetag: 25.05.2007
(51) Int. Cl.: B23G 5/04, B23G 5/18, B23B 29/24, B23B 27/16, B23C 5/04, B23C 5/20

(54) **Vorrichtung zum Fräsen eines Profils sowie Halter und Fräswerkzeug dafür**
Device for machining a profile and holder and milling tool therefor
Dispositif destiné au fraisage d'un profilé tout comme support et outil de fraisage correspondants

(43) Veröffentlichungstag der Anmeldung: 26.11.2008
(73) Patentinhaber: Johs. Boss GmbH & Co. KG, 72461 Albstadt-Onstmettingen (DE)
(72) Erfinder: Boss, Heinz, 72461 Albstadt-Onstmettingen (DE)
(74) Vertreter: Busch, Thomas

(56) Entgegenhaltungen:
- EP-A- 1 669 149
- WO-A-01/00362
- WO-A-03/070405
- WO-A-2004/067216
- DE-A1-102005 019 921
- JP-A- 4 152 020
- US-A- 3 829 921
- US-A- 4 466 762
- US-A- 5 088 861
- US-A1- 2001 020 406
- US-A1- 2004 081 519

## Beschreibung

Die Erfindung betrifft eine Fräsglocke zum Fräsen eines Außengewindes nach dem Oberbegriff des Anspruchs 1.

Fräsvorrichtungen der eingangs genannten Art sind bekannt. Dabei handelt es sich beispielsweise um Schaftfräser oder um Fräsglocken. Bei Fräsglocken sind die Fräswerkzeuge plattenförmig ausgebildet. Im Gegensatz zu Schaftfräsern können bei Fräsglocken mehrere Fräswerkzeuge gleichzeitig eingesetzt werden.

Die als Wechselplatten ausgeführten Fräswerkzeuge der bekannten Fräsglocken weisen regelmäßig nur einen einzigen Arbeitsbereich auf. Ist dieser Arbeitsbereich abgenutzt, muß das Fräswerkzeug ausgebaut und nachgeschliffen oder durch ein anderes ersetzt werden. Dieser Umstand beeinträchtigt die Handhabung der Fräsvorrichtung.

Eine Fräsglocke nach dem Oberbegriff von Anspruch 1 ist aus der WO 03/070405 A1 bekannt. Eine ähnliche Fräsglocke zeigt die WO 2004/067216 A1.

Ferner ist aus der US 2004/0081519 A1 eine Fräsvorrichtung mit als Wechselplatten ausgestalteten Fräswerkzeugen bekannt.

Eine nicht in Glockenform ausgestaltete Fräsvorrichtung zum Fräsen von Außengewinden zeigt die US 5,088,861 A. Ferner zeigen die US 4,466,762 A und die WO 01/00362 A1 Fräsvorrichtungen zum Ausbilden von Innengewinden.

Es ist Aufgabe der Erfindung, die oben erwähnten Fräsglocken derart weiterzubilden, daß ihre Handhabung verbessert ist.

Erfindungsgemäß wird die gestellte Aufgabe mit einer Fräsglocke nach Anspruch 1 gelöst. Vorteilhafte Ausgestaltungen sind Gegenstand der Unteransprüche.

Ist der erste Arbeitsbereich abgenutzt, muß bei der erfindungsgemäßen Fräsvorrichtung das Werkzeug nicht nachgeschliffen oder ausgetauscht werden. Vielmehr genügt es, das Fräswerkzeug in die zweite Betriebsstellung zu bringen, woraufhin mit dem zweiten Arbeitsbereich weitergearbeitet werden kann. Dadurch ist die Handhabung der Fräsvorrichtung vereinfacht.

Nach einer besonders bevorzugten Ausführungsform der Erfindung ist vorgesehen, daß sich die erste Betriebsstellung in ihrem Drehwinkel um eine parallel zu einer Drehachse der Vorrichtung liegende Achse von der zweiten Betriebsstellung unterscheidet.

Mit anderen Worten muß zum Wechseln von dem ersten Arbeitsbereich in den zweiten Arbeitsbereich das Fräswerkzeug nur um die parallel zu der Drehachse der Gesamtvorrichtung liegende Achse verdreht werden. Dies stellt eine erhebliche Vereinfachung der Handhabung gegenüber einem Austausch des Fräswerkzeugs dar.

Weiter bevorzugt weist der Halter mindestens eine in der Axialansicht C-förmige Ausnehmung zum Aufnehmen eines Fräswerkzeugs auf, wobei in der ersten Betriebsstellung der erste Arbeitsbereich in der Öffnung des "C" liegt und der zweite Arbeitsbereich von der Innenwand der Ausnehmung überdeckt ist.

Mit anderen Worten ist das Fräswerkzeug bei dieser Ausgestaltung in das Innere des Halters integriert. Dadurch wird ein Verlieren des Fräswerkzeugs weniger wahrscheinlich. Darüber hinaus ist das Fräswerkzeug wegen der Umschlingung durch das "C" verläßlich in den Halter eingebettet, was der Gesamtstabilität, insbesondere der Verwindungs- und Torsionssteifigkeit zugute kommt. Ferner sind dadurch größere Schnittgeschwindigkeiten möglich.

Der Halter ist erfindungsgemäß bevorzugt zum gleichzeitigen Halten von zwei, drei oder mehr, weiter bevorzugt von sechs Fräswerkzeugen ausgelegt.

Hierbei gilt, je höher die Anzahl der von dem Halter gehaltenen Fräswerkzeuge ist, um so größere Vorschübe können realisiert werden.

Bevorzugt ist der Halter zum derartigen Halten von zwei oder mehr Fräswerkzeugen ausgelegt, daß mindestens zwei Arbeitsbereiche gleichzeitig zum Fräsen dienen, die verschiedenen Fräswerkzeugen angehören.

Mit anderen Worten werden nach dieser Ausgestaltung beim Fräsen mindestens zwei Werkzeuge gleichzeitig benutzt. Dies hat erhebliche Vorteile.

Nach einer weiter bevorzugten Ausführungsform der Erfindung weist das Fräswerkzeug zwei, drei oder mehr, weiter bevorzugt sechs Arbeitsbereiche auf.

Je mehr Arbeitsbereiche an dem Fräswerkzeug ausgebildet sind, um so länger kann es verwendet werden, bevor es ausgetauscht oder neu geschliffen werden muß.

Dabei sind die Arbeitsbereiche erfindungsgemäß bevorzugt an sternförmig angeordneten Radialansätzen des Fräswerkzeugs ausgebildet.

Mit anderen Worten wird quasi eine Rotationssymmetrie erreicht, was mechanisch besonders vorteilhaft ist.

Nach einer Ausführungsform der Erfindung weist jeder Arbeitsbereich zwei oder mehr, bevorzugt sechs bis zehn Schneiden auf, die in einer sich in Axialrichtung erstrekkenden Reihe angeordnet sind.

Mithin werden mehrere Schneiden gleichzeitig eingesetzt, was sich vorteilhaft auf das Fräsergebnis sowie auf das Fräsverfahren auswirkt.

Eine Außenkontur einer Schneide eines Arbeitsbereichs erstreckt sich dabei bevorzugt entlang einer Kreisbahn in Umfangsrichtung um eine Längsachse des Fräswerkzeuges.

Mit anderen Worten ist die betreffende Schneide beispielsweise zum Fräsen eines Gewindes nicht in den Steigungswinkel des Gewindes eingeschwenkt. Dadurch kann die Steigung des zu fräsenden Gewindes allein durch den Vorschub bestimmt werden.

Das Fräswerkzeug ist bevorzugt lösbar an dem Halter befestigt.

Dadurch kann es zum Austausch oder zum Schleifen ausgebaut werden.

Bevorzugt ist mindestens eine mit dem Befestigungsbereich zusammenwirkende Befestigungseinrichtung vorgesehen, die nach einer weiter bevorzugten Ausführungsform der Erfindung eine Klemmschraube aufweist.

Diese Ausgestaltung vereinfacht die Handhabung der Fräsvorrichtung noch weiter.

Erfindungsgemäß kann die Klemmschraube beliebig ausgerichtet sein, sofern sie die notwendige Klemmkraft aufbringt und das Fräswerkzeug sachgemäß positioniert. Erfindungsgemäß bevorzugt schließt sie aber mit der Radialrichtung auf eine Drehachse der Vorrichtung einen spitzen Winkel ein.

Dadurch kann sie Torsionen besonders effektiv vorbeugen.

Der spitze Winkel beträgt erfindungsgemäß bevorzugt 1° bis 20°, weiter bevorzugt 1 ° bis 10°.

Die Erfindung schafft nicht nur die komplette Fräsvorrichtung, wie sie oben beschrieben ist, sondern vielmehr auch die diese Fräsvorrichtung ausmachenden Einzelteile, nämlich den Halter und das Fräswerkzeug.

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine schematische perspektivische Ansicht eines bevorzugten Ausführungsbeispiels der Fräsvorrichtung nach der Erfindung,

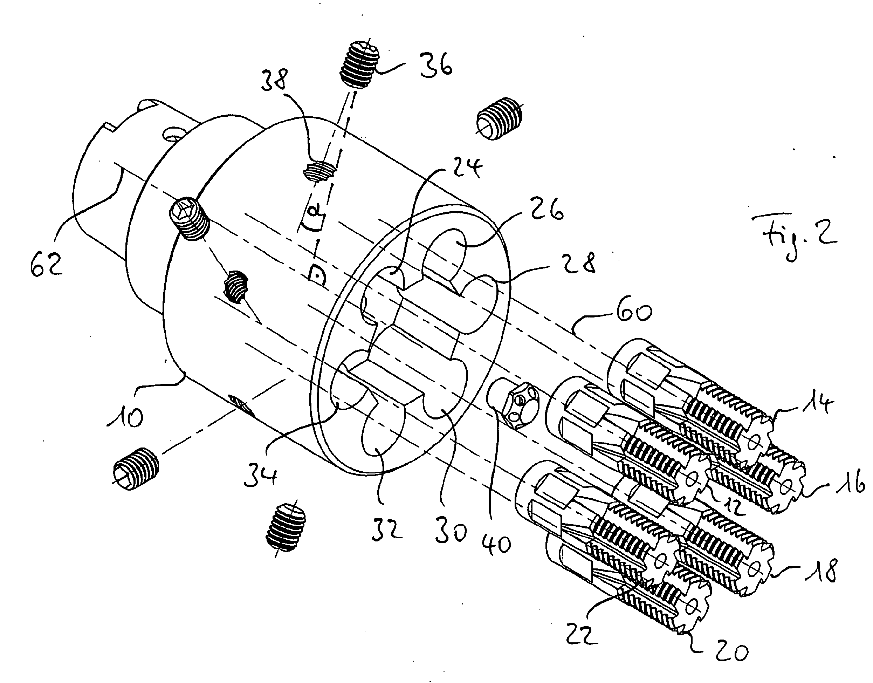

- Figur 2: eine schematische Explosionsansicht der Vorrichtung nach Figur 1 und
- Figur 3: eine schematische perspektivische Ansicht eines Fräswerkzeugs der Fräsvorrichtung nach Figur 1.

Zu der in der Zeichnung dargestellten Fräsvorrichtung gehören ein Halter 10 und sechs Fräswerkzeuge 12, 14, 16, 18, 20, 22. Sie sind in C-förmigen Ausnehmungen 24, 26, 28, 30, 32, 34 lösbar in dem Halter 10 aufgenommen. Zur Befestigung dienen jeweils Klemmschrauben, von denen eine beispielhaft mit der Bezugszahl 36 bezeichnet ist. Die zugehörige Gewindebohrung 38 ist nicht radial in dem Halter 10 ausgerichtet, sondern vielmehr zur Radialrichtung angestellt. Dadurch ist der Gewindegang verlängert, was zu einer verläßlicheren Halterung führt. Ferner wird das Fräswerkzeug dadurch gegen einen zugehörigen Anschlag (nicht gezeigt) in dem Halter 10 gedrückt, was der Positionierung dient. Der Anstellwinkel α ist spitz und beträgt in dem dargestellten Ausführungsbeispiel ca. 2°.

Ein Kühlmittelverteiler ist mit der Bezugszahl 40 bezeichnet.

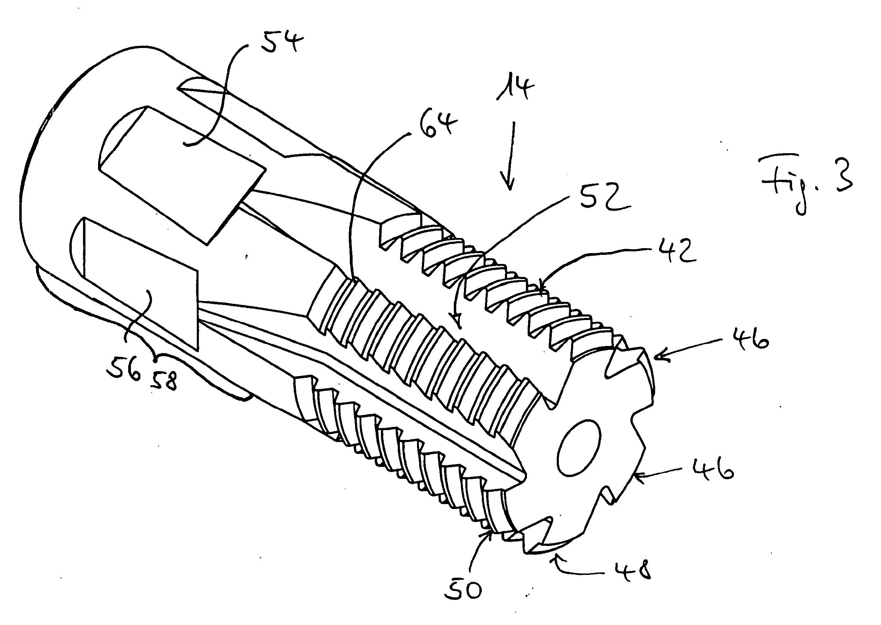

Figur 3 zeigt beispielhaft das Fräswerkzeug 14. Es weist sechs Arbeitsbereiche 42, 44, 46, 48, 50, 52 auf. Ferner weist es sechs Klemmflächen auf, von denen zwei beispielhaft mit den Bezugszahlen 54 bzw. 56 bezeichnet sind. Die Klemmflächen sind an einem sich axial von den Arbeitsbereichen erstreckenden Befestigungsbereich 58 ausgebildet. Demgegenüber erstrecken sich die Arbeitsbereiche 42 bis 52 in etwa sternförmig radial von einer Längsachse 60 des Fräswerkzeugs 14. Sie weisen jeweils eine Vielzahl von Schneiden auf, die kammartig in einer Reihe angeordnet sind.

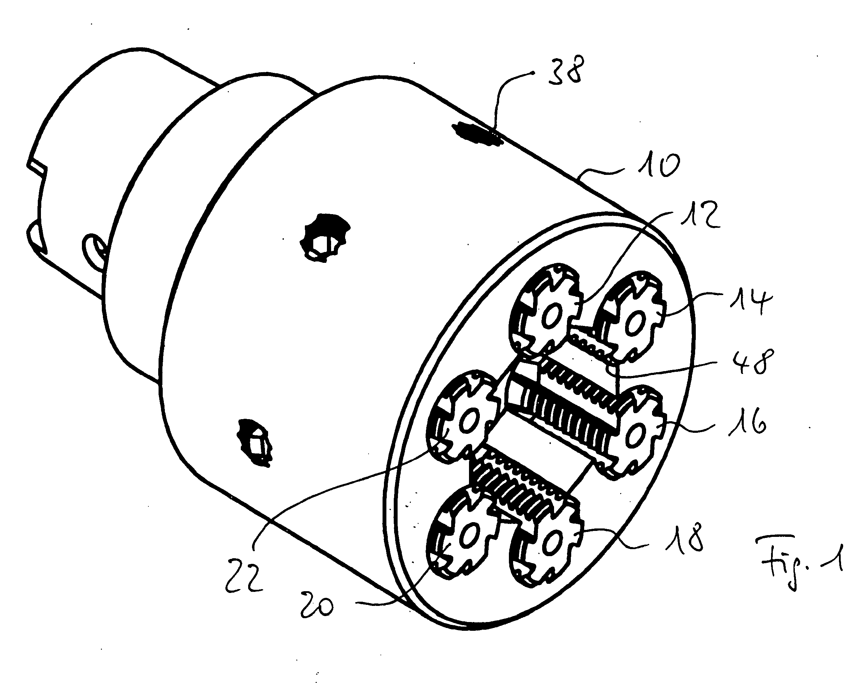

In der in Figur 1 gezeigten Betriebsstellung dient der Arbeitsbereich 48 dem Fräsen, wohingegen die anderen Arbeitsbereiche 42, 44, 46, 50, 52 nicht zum Fräsen dienen. Daher liegt der Arbeitsbereich 48 in der Öffnung des "C", wohingegen die anderen Arbeitsbereiche von der Innenwand der Aufnahmeöffnung 26 überdeckt und dadurch geschützt sind.

Es sei angenommen, daß in der Betriebsstellung nach Figur 1 eine Klemmschraube auf die Klemmfläche 54 des Fräswerkzeugs 14 wirkt. Soll nun anstelle des Arbeitsbereichs 48 der Arbeitsbereich 46 zum Fräsen dienen, so muß das Fräswerkzeug 14 nur um eine Sechsteldrehung um die Achse 60 im Uhrzeigersinn gedreht werden, so daß die Klemmfläche 56 mit der Klemmschraube zusammenarbeitet.

Verglichen mit einem Fräswerkzeug mit nur einem einzigen Arbeitsbereich kann also mit der erfindungsgemäßen Fräsvorrichtung sechsmal so lange gefräst werden, bis ein Nachschleifen oder ein Austauschen der Fräswerkzeuge erforderlich ist. Dies vereinfacht nicht nur die Handhabung der Fräsvorrichtung, sondern auch die Lagerhaltung. Es muß nämlich erst nach der sechsfachen Fräsleistung ein Austausch erfolgen. Da jeweils fünf Arbeitsbereiche eines Fräswerkzeugs im Halter vorhanden sind, können sie auch nicht verloren werden, im Gegensatz zu Fräswerkzeugen mit jeweils nur einem Arbeitsbereich.

Die Achse 60 liegt parallel zu einer Drehachse 62 der Gesamtvorrichtung.

Bei dem in der Zeichnung dargestellten Ausführungsbeispiel weisen die Arbeitsbereiche jeweils eine Reihe von neun Schneiden auf. Beispielhaft ist eine Schneide des Arbeitsbereichs 52 mit der Bezugszahl 64 bezeichnet. Die Außenkontur der Schneide 64 - sowie aller anderen Schneiden - erstreckt sich entlang einer Kreisbahn in Umfangsrichtung um die Achse 60. Die Schneiden sind also nicht in den Steigungswinkel des mit der Vorrichtung zu fräsenden Gewindes eingeschwenkt.

## Patentansprüche

1. Fräsglocke zum Fräsen eines Außengewindes, mit
mindestens einem Fräswerkzeug (12, 14, 16,18, 20, 22) und
mindestens einem Halter (10) zum Halten des Fräswerkzeugs,
**dadurch gekennzeichnet, daß**
das Fräswerkzeug mindestens zwei unterschiedliche Betriebsstellungen bezüglich des Halters einnehmen kann, nämlich
eine erste Betriebsstellung, in der ein erster Arbeitsbereich (48) des Fräswerkzeugs zum Fräsen dient,
eine zweite Betriebsstellung, in der ein nicht mit dem ersten Arbeitsbereich zusammenfallender zweiter Arbeitsbereich (46) zum Fräsen dient, und
das Fräswerkzeug einen Befestigungsbereich (58) aufweist, der in Axialrichtung gesehen in einem anderen Bereich als die Arbeitsbereiche (42, 44, 46, 48, 50, 52) liegt.

2. Fräsglocke nach Anspruch 1, **dadurch gekennzeichnet, daß** sich die erste Betriebsstellung in ihrem Drehwinkel um eine parallel zu einer Drehachse (62) der Vorrichtung liegende Achse (60) von der zweiten Betriebsstellung unterscheidet.

3. Fräsglocke nach Anspruch 1 oder 2, **dadurch gekennzeichnet, daß** der Halter (10) mindestens eine in der Axialansicht C-förmige Ausnehmung (24, 26, 28, 30, 32, 34) zum Aufnehmen eines Fräswerkzeugs (12, 14, 16, 18, 20, 22) aufweist, wobei in der ersten Betriebsstellung der erste Arbeitsbereich (48) in der Öffnung des "C" liegt und der zweite Arbeitsbereich (46) von der Innenwand der Ausnehmung überdeckt ist.

4. Fräsglocke nach einem der vorangehenden Ansprüche, **dadurch gekennzeichnet, daß** der Halter (10) zum gleichzeitigen Halten von zwei, drei oder mehr, bevorzugt sechs Fräswerkzeugen (12, 14, 16, 18, 20, 22) ausgelegt ist.

5. Fräsglocke nach einem der vorangehenden Ansprüche, **dadurch gekennzeichnet, daß** der Halter (10) zum derartigen Halten von zwei oder mehr Fräswerkzeugen (12, 14, 16, 18, 20, 22) ausgelegt ist, daß mindestens zwei Arbeitsbereiche (42, 44, 46, 48, 50, 52) gleichzeitig zum Fräsen dienen, die verschiedenen Fräswerkzeugen angehören.

6. Fräsglocke nach einem der vorangehenden Ansprüche, **dadurch gekennzeichnet, daß** das Fräswerkzeug (12, 14, 16, 18, 20, 22) zwei, drei oder mehr, bevorzugt sechs Arbeitsbereiche (42, 44, 46, 48, 50, 52) aufweist.

7. Fräsglocke nach einem der vorangehenden Ansprüche, **dadurch gekennzeichnet, daß** die Arbeitsbereiche (42, 44, 46, 48, 50, 52) an sternförmig angeordneten Radialansätzen des Fräswerkzeugs (12, 14, 16, 18, 20, 22) ausgebildet sind.

8. Fräsglocke nach einem der vorangehenden Ansprüche, **dadurch gekennzeichnet, daß** jeder Arbeitsbereich (42, 44, 46, 48, 50, 52) zwei oder mehr, bevorzugt sechs bis zehn Schneiden (64) aufweist, die in einer sich in Axialrichtung erstreckenden Reihe angeordnet sind.

9. Fräsglocke nach einem der vorangehenden Ansprüche, **dadurch gekennzeichnet, daß** sich eine Außenkontur einer Schneide (64) eines Arbeitsbereichs (52) entlang einer Kreisbahn in Umfangsrichtung um eine Längsachse (60) des Fräswerkzeugs (14) erstreckt.

10. Fräsglocke nach einem der vorangehenden Ansprüche, **dadurch gekennzeichnet, daß** das Fräswerkzeug (12, 14, 16, 18, 20, 22) lösbar an dem Halter (10) befestigt ist.

11. Fräsglocke nach einem der vorangehenden Ansprüche, **gekennzeichnet durch** mindestens eine mit dem Befestigungsbereich (58) zusammenwirkende Befestigungseinrichtung (36).

12. Fräsglocke nach Anspruch 11 **dadurch gekennzeichnet, daß** die Befestigungseinrichtung (36) eine Klemmschraube aufweist.

13. Fräsglocke nach Anspruch 12, **dadurch gekennzeichnet, daß** die Klemmschraube (36) mit der Radialrichtung auf eine Drehachse (62) der Vorrichtung einen spitzen Winkel (α) einschließt.

14. Fräsglocke nach Anspruch 13, **dadurch gekennzeichnet, daß** der spitze Winkel (α) 1 ° bis 20°, bevorzugt 1 ° bis 10° beträgt.

15. Halter (10) für eine Fräsglocke nach einem der vorangehenden Ansprüche.

16. Fräswerkzeug (12, 14, 16, 18, 20, 22) für eine Fräsglocke nach einem der Ansprüche 1 bis 14.

## Claims

1. A milling bell for machining an external thread,
having at least one milling tool (12, 14, 16, 18, 20, 22) and
at least one holder (10) for holding the milling tool,
**characterised in that**
the milling tool can adopt at least two different operating positions in relation to the holder, namely
a first operating position in which a first working region (48) of the milling tool serves to machine,
a second operating position in which a second working region (46), not coinciding with the first working region, serves to machine, and
the milling tool has an attachment region (58) which lies in a region different from the working regions (42, 44, 46, 48, 50, 52) as viewed in the axial direction.

2. The milling bell according to Claim 1, **characterised in that** the first operating position differs from the second operating position in its angle of rotation about an axis (60) lying parallel to an axis of rotation (62) of the apparatus.

3. The milling bell according to Claim 1 or 2, **characterised in that** the holder (10) has at least one C-shaped recess (24, 26, 28, 30, 32, 34), as seen in the axial view, for accommodating a milling tool (12, 14, 16, 18, 20, 22), in the first operating position the first working region (48) lying in the opening of the "C", and the second working region (46) being covered by the inner wall of the recess.

4. The milling bell according to any of the preceding claims, **characterised in that** the holder (10) is designed for simultaneously holding two, three or more, preferably six milling tools (12, 14, 16, 18, 20, 22).

5. The milling bell according to any of the preceding claims, **characterised in that** the holder (10) is designed for holding two or more milling tools (12, 14, 16, 18, 20, 22) such that at least two working regions (42, 44, 46, 48, 50, 52) serve simultaneously to machine, and are associated with different milling tools.

6. The milling bell according to any of the preceding claims, **characterised in that** the milling tool (12, 14, 16, 18, 20, 22) has two, three or more, preferably six working regions (42, 44, 46, 48, 50, 52).

7. The milling bell according to any of the preceding claims, **characterised in that** the working regions (42, 44, 46, 48, 50, 52) are formed on radial attachments of the milling tool (12, 14, 16, 18, 20, 22) arranged in a star shape.

8. The milling bell according to any of the preceding claims, **characterised in that** every working region (42, 44, 46, 48, 50, 52) has two or more, preferably six to ten blades (64) which are arranged in a row extending in an axial direction.

9. The milling bell according to any of the preceding claims, **characterised in that** an outer contour of a blade (64) of a working region (52) extends along a circular path in the circumferential direction about a longitudinal axis (60) of the milling tool (14).

10. The milling bell according to any of the preceding claims, **characterised in that** the milling tool (12, 14, 16, 18, 20, 22) is attached releaseably to the holder (10).

11. The milling bell according to any of the preceding claims, **characterised by** at least one attachment device (36) co-operating with the attachment region (58).

12. The milling bell according to Claim 11, **characterised in that** the attachment device (36) has a clamping screw.

13. The milling bell according to Claim 12, **characterised in that** the clamping screw (36) encloses an acute angle (α) with the radial direction onto an axis of rotation (62) of the apparatus.

14. The milling bell according to Claim 13, **characterised in that** the acute angle (α) is 1° to 20°, preferably 1° to 10°.

15. A holder (10) for a milling bell according to any of the preceding claims.

16. A milling tool (12, 14, 16, 18, 20, 22) for a milling bell according to any of Claims 1 to 14.

## Revendications

1. Cloche de fraisage servant au fraisage d'un filetage externe, comportant au moins un outil de fraisage (12, 14, 16, 18, 20, 22) et
au moins un support (10) destiné à tenir l'outil de fraisage,
**caractérisée en ce que**
l'outil de fraisage peut adopter au moins deux positions de fonctionnement différentes par rapport au support, à savoir
une première position de fonctionnement dans laquelle le fraisage est effectué par une première zone de travail (48) de l'outil de fraisage,
une seconde position de fonctionnement dans laquelle le fraisage est effectué par une seconde zone de travail (46) ne coïncidant pas avec la première zone de travail, et
l'outil de fraisage présente une zone de fixation (58) située, vue dans la direction axiale, dans une autre zone que les zones de travail (42, 44, 46, 48, 50, 52).

2. Cloche de fraisage selon la revendication 1, **caractérisée en ce que** la première position de fonctionnement se différencie de la seconde position de fonctionnement par son angle de rotation autour d'un axe (60) parallèle à un axe de rotation (62) du dispositif.

3. Cloche de fraisage selon la revendication 1 ou 2, **caractérisée en ce que** le support (10) présente au moins un évidement (24, 26, 28, 30, 32, 34), ayant une forme de C dans la vue axiale, destiné à recevoir un outil de fraisage (12, 14, 16, 18, 20, 22), avec laquelle, dans la première position de fonctionnement, la première zone de travail (48) se trouve dans l'ouverture du C et la seconde zone de travail (46) est recouverte par la paroi intérieure de l'évidement.

4. Cloche de fraisage selon l'une des revendications précédentes, **caractérisée en ce que** le support (10) est conçu pour porter simultanément au moins deux ou trois, de préférence six, outils de fraisage (12, 14, 16, 18, 20, 22).

5. Cloche de fraisage selon l'une des revendications précédentes, **caractérisée en ce que** le support (10) est conçu pour porter au moins deux outils de fraisage (12, 14, 16, 18, 20, 22) de sorte qu'au moins deux zones de travail (42, 44, 46, 48, 50, 52) appartenant à divers outils de fraisage servent simultanément au fraisage.

6. Cloche de fraisage selon l'une des revendications précédentes, **caractérisée en ce que** l'outil de fraisage (12, 14, 16, 18, 20, 22) présente au moins deux ou trois, de préférence six zones de travail (42, 44, 46, 48, 50, 52).

7. Cloche de fraisage selon l'une des revendications précédentes, **caractérisée en ce que** les zones de travail (42, 44, 46, 48, 50, 52) sont constituées sur des saillies radiales de l'outil de fraisage (12, 14, 16, 18, 20, 22) agencées en forme d'étoile.

8. Cloche de fraisage selon l'une des revendications précédentes, **caractérisée en ce que** chaque zone de travail (42, 44, 46, 48, 50, 52) présente au moins deux, de préférence de six à dix tranchants (64) qui sont agencés en une ligne se prolongeant dans la direction axiale.

9. Cloche de fraisage selon l'une des revendications précédentes, **caractérisée en ce qu'**un contour extérieur d'un tranchant (64) d'une zone de travail (52) se prolonge le long d'une trajectoire circulaire dans une direction circonférentielle autour d'un axe longitudinal (60) de l'outil de fraisage (14).

10. Cloche de fraisage selon l'une des revendications précédentes, **caractérisée en ce que** l'outil de fraisage (12, 14, 16, 18, 20, 22) est fixé au support (10) de manière amovible.

11. Cloche de fraisage selon l'une des revendications précédentes, **caractérisée par** au moins un dispositif de fixation (36) coopérant avec la zone de fixation (58).

12. Cloche de fraisage selon la revendication 11, **caractérisée en ce que** le dispositif de fixation (36) présente une vis de blocage.

13. Cloche de fraisage selon la revendication 12, **caractérisée en ce que** la vis de blocage (36) forme un angle aigu (α) avec la direction radiale orientée vers un axe de rotation (62) du dispositif.

14. Cloche de fraisage selon la revendication 13, **caractérisée en ce que** l'angle aigu (α) est de 1° à 20°, de préférence de 1 ° à 10°.

15. Support (10) pour une cloche de fraisage selon l'une des revendications précédentes.

16. Outil de fraisage (12, 14, 16, 18, 20, 22) pour une cloche de fraisage selon l'une des revendications 1 à 14.
